Europäisches Patentamt

European Patent Office

Office européen des brevets

(11) Numéro de publication: **0 226 690 B1**

## FASCICULE DE BREVET EUROPEEN

(45) Date de publication de fascicule du brevet: **11.03.92** (51) Int. Cl.⁵: **C01F 11/46**, C04B 11/26

(21) Numéro de dépôt: **85870190.7**

(22) Date de dépôt: **23.12.85**

Le dossier contient des informations techniques présentées postérieurement au dépôt de la demande et ne figurant pas dans le présent fascicule.

(54) **Procédé de traitement du sulfate de calcium hémihydraté forme alpha et produit obtenu.**

(43) Date de publication de la demande:
**01.07.87 Bulletin 87/27**

(45) Mention de la délivrance du brevet:
**11.03.92 Bulletin 92/11**

(84) Etats contractants désignés:
**AT BE CH DE FR GB IT LI LU NL SE**

(56) Documents cités:
**DE-B- 1 567 821**
**GB-A- 1 135 951**
**GB-A- 1 169 413**
**GB-A- 1 484 139**
**US-A- 4 151 000**

(73) Titulaire: **Société Chimique PRAYON-RUPEL Société Anonyme**
**Rue Joseph Wauters, 144**
**B-5130 Engis(BE)**

(72) Inventeur: **Sart, Michel**
**Rue Neuve Voie, 4**
**B-4130 Engis(BE)**
Inventeur: **Vaessen, Hanneke**
**Place aux Foires, 17a**
**B-5400 Marche-en-Famenne(BE)**

(74) Mandataire: **van Malderen, Michel et al**
**p.a. FREYLINGER & ASSOCIES 85/042 Boulevard de la Sauvenière**
**B-4000 Liège(BE)**

## Description

Objet de l'invention
– – – – – – – – – – –

La présente invention concerne un procédé nouveau de traitement de sulfate de calcium hemihydraté forme α (ci-après dénommé hémihydrate α) sous produit de la production de l'acide phosphorique, en vue de permettre son utilisation directe; l'invention s'étend au produit ainsi obtenu.

Résumé de l'état de la technique
– – – – – – – – – – – – – – – – – –

L'acide phosphorique est fabriqué par attaque acide de matières phosphatées de différentes origines.

Les différents procédés se distinguent les uns des autres par la nature de l'acide d'attaque et par le ou les sous -produits obtenus.

Il existe des procédés plus anciens, à une cristallisation consistant en une attaque sulfurique, nitrique, sulfo-nitrique, chlorhydrique ou phosphorique des matières phosphatées. Le sel de calcium se trouve donc, après attaque, sous forme de sulfate (insoluble), nitrate, chlorure ou phosphate monocalcique solubles, en mélange avec l'acide phosphorique. Dans certains procédés, on reprécipite alors le sel de calcium soluble par une addition, dans un second temps, d'acide sulfurique ou d'un sulfate tel que le sulfate d'ammonium.

Selon les conditions de température et d'acidité, le sulfate de calcium peut être obtenu sous différents degrés d'hydratation : dihydraté (gypse), hémihydraté forme α (plâtre) ou anhydre (anhydrite II).

Le sulfate de calcium formé par ces procédés est en général impur : par exemple, la quantité de $P_2O_5$ peutavoisiner 1%.

D'autres procédés sont apparus plus récemment, visant essentiellement à augmenter le titre de l'acide produit et le rendement d'attaque en $P_2O_5$ ; en conséquence, un sulfate de calcium plus pur et donc mieux approprié à une valorisation ultérieure a généralement été produit. Il s'agit des procédés à double ou à multiple cristallisation. Selon le procédé utilisé, on obtient alors soit un sulfate de calcium dihydraté, soit un sulfate de calcium hémihydraté forme α ou encore un sulfate de calcium anhydre (anhydrite II).

On sait que l'hémihydrate α se réhydrate en gypse soit lors du stockage en tas de l'hémihydrate α avec son eau d'imprégnation, soit par repulpage aqueux. Selon des techniques connues, ce gypse peut être utilisé, s'il est suffisamment pur pour différentes applications : moyennant un conditionnement simple, en général une neutralisation et un broyage, comme régulateur de prise du ciment, un produit à faible valeur ajoutée; comme matière première pour la fabrication d'hémihydrate forme β, forme α ou un mélange de ces deux formes selon diverses techniques de séchage-calcination : par exemple sécheur-calcinateur pneumatique, cuiseur ou autoclave. Ces façons de procédér sont évidemment fort coûteuses.

Il a été proposé d'utiliser cet hémihydrate α à l'état brut séché; de lui adjoindre un accélérateur de prise comme par exemple une substance à réaction alcaline combinée à un sulfate de métal alcalin (brevets belges 899.945 et 899.946). Ce faisant, la seule utilisation citée est limitée à la consolidation de galeries souterraines.

Par les documents GB-1 484 139 et GB-1 135 951, on connaît également un procédé de traitement par lavage et broyage de sulfate de calcium hémihydraté sous forme alpha provenant d'un procédé de fabrication d'acide phosphorique à simple cristallisation (voir notamment GB-1 135 951, page 1, lignes 82 et 83). Le produit ainsi obtenu peut être utilisé directement ou en association avec des fibres de renforcement ou autres additifs tels que des pigments, des agents mouillants, des retardateurs et/ou accélérateurs de prise, pour divers éléments de construction.

Résumé de l'invention
– – – – – – – – – – –

L'invention porte sur le sulfate de calcium hémihydraté forme α tel qu'il est obtenu à la sortie d'une unité de fabrication d'acide phosphorique selon le brevet belge 683 739 ou à cristallisation multiple.

La demanderesse a cherché à mettre au point un procédé pour valoriser très économiquement cet hémihydrate α pour une large gamme d'applications, le produit ainsi obtenu présente des qualités reproductibles et des propriétés mécaniques très intéressantes. Il ne nécessite pas obligatoirement la mise en oeuvre d'accélérateurs ou de retardateurs tels que des chlorures, des sels de potassium ou de fer ou des matières organiques.

Essais préliminaires
– – – – – – – – – – –

On a d'abord tenté d'utiliser l'hémihydrate α tel qu'il sort de l'installation d'acide phosphorique.

L'hémihydrate $\alpha$ a alors l'aspect d'un sable humide, il est accompagné de 10 à 25% d'eau d'imprégnation. Il a été immédiatement séché de façon à éliminer totalement l'eau d'imprégnation par exemple dans un sécheur pneumatique ou dans une auge à double enveloppe munie de vis ou de pallettes dont l'auge à double enveloppe est chauffée par un fluide caloporteur.

On a ainsi obtenu un produit présentant les inconvénients suivants :

. un temps de prise irrégulier et incontrolable dû essentiellement au faciès cristallin variable et à la répartition granulométrique variable des cristaux d'hémihydrate $\alpha$;

. des résistances mécaniques faibles et variables dues essentiellement à la présence de certaines impuretés et à la surface spécifique faible et variable de cet hémihydrate $\alpha$ .

L'addition de modificateurs connus de prise en vue d'atténuer les irrégularités précitées ne permet pas de supprimer de façon satisfaisante ces inconvénients. De plus, les propriétés de l'hémihydrate $\alpha$ ainsi formé sont tellement variables qu'il faut à tout moment adapter la quantité d'additif pour obtenir un produit fini de qualité plus ou moins constante.

Éléments caractéristiques de l'invention

Selon l'invention, l'hémihydrate $\alpha$ sous produit de la production de l'acide phosphorique selon le brevet belge n° 683 739 ou selon un procédé à cristallisations multiples est lavé soigneusement pour éliminer au mieux les impuretés est soumis, sans permettre une ré-hydratation substantielle en gypse, à une opération de séchage-calcination de manière à obtenir un produit fini ayant une teneur en eau de cristallisation égale en comprise entre 6 et 1,5%, et à une opération de broyage.

L'hémihydrate $\alpha$ est donc traité sans permettre une ré-hydratation préalable marquée en gypse.

Les deux opérations de séchage-calcination et de broyage peuvent se dérouler simultanément.

La présence d'anhydrite soluble (anhydrite III) n'est généralement pas recommandée dans le plâtre : celle-ci donne en effet lieu à des prises rapides et intempestives. Cependant, de manière surprenante, lors des opérations de séchage-calcination de l'hémihydrate $\alpha$ mises en oeuvre selon l'invention, il est possible d'obtenir dans le produit fini des teneurs en anhydrite pouvant aller jusqu'à 75%; le produit obtenu conserve une stabilité suffisante; en particulier, il peut être stocké dans des conditions satisfaisantes.

Les opérations de séchage-calcination et de broyage permettent de mettre au point un produit dont les propriétés sont reproductibles et adaptables aux besoins tant en ce qui concerne la vitesse de prise souhaitée que les résistances mécaniques visées, sans qu'il faille obligatoirement recourir à la mise en oeuvre de retardateurs ou d'accélérateurs de prise tels que des chlorures, des sels de potassium ou de fer ou des matières organiques.

En effet, le broyage permet de régulariser les propriétés du produit obtenu. L'intensité plus ou moins forte du broyage agira par la création de nouvelles surfaces actives sur la vitesse de prise et sur les résistances mécaniques.

Un broyage plus ou moins intense sera déterminé par la granulométrie du produit alimenté; par ailleurs un broyage trop poussé rend cette opération peu économique.

Les procédés de production d'acide phosphorique produisent un hémihydrate $\alpha$ dont la granulométrie de départ est de l'ordre de 90 à 60% de refus à 45 $\mu$m. Selon les applications envisagées, il sera avantageusement broyé de manière à être compris entre 60% et 10% de refus à 45 $\mu$m et à atteindre une surface spécifique de 1 500 à 5 000 cm$^2$/g mesuré selon la norme DIN 1164, 4° partie.

Le séchage-calcination plus ou moins poussé agira aussi sur les caractéristiques de prise du produit. Cette étape de séchage-calcination peut varier dans le domaine qui donnera un produit fini dont l'eau de cristallisation sera comprise entre 6% à 1,5%. La valeur de 6% représente la teneur théorique en eau de cristallisation d'un hémihydrate pur, toute eau excédentaire sera de l'eau libre pouvant donner lieu à une prise en masse généralement non souhaitée. Il n'est généralement pas nécessaire de descendre en dessous de 1,5% car on grève alors les coûts de séchage-calcination.

Le produit obtenu peut encore être traité de façon connue pour neutraliser les faibles acidités résiduaires par addition d'une petite quantité d'un agent neutralisant tels que la chaux vive, la chaux hydratée, le carbonate de calcium ou un mélange de ces composants. Cette neutralisation peut, le cas échéant, améliorer les résistances mécaniques du produit.

Le cas échéant, la prise du produit pourra être ajustée par addition d'accélérateurs ou de retardateurs classiques (gypse finement et fraichement broyé, chaux vive ou hydratée, carbonate de calcium, sulfate de potassium, sulfate de fer, chlorures, protéines dégradées, et produits organiques divers, etc.).

On voit donc que la combinaison de ces différentes opérations de lavage, séchage-calcination, broyage, neutralisation, addition éventuelle de modificateurs de prise permet de modifier à souhait le temps de prise qui peut ainsi varier de quelques minutes à 2 heures.

De plus, le produit obtenu, selon l'invention, a des résistances à la compression qui peuvent atteindre plus de 20 N/mm² après 5h, plus de 30N/mm² après 1 jour et plus de 50 N/mm² après 28 jours. Il peut donc être utilisé tel quel ou comme liant dans de nombreuses applications.

L'invention sera décrite plus en détail en référence aux exemples annexés. L'exemple 1 est un exemple comparatif illustrant la nécessité d'un choix des paramètres opératoires appropriés pour obtenir des produits de qualité permettant leur utilisation et les exemples 2 à 7 illustrent l'influence des différents paramètres sur les propriétés du produit.

Exemple 1 (exemple comparatif)

Hémihydrate α tel quel, sans adjuvants, obtenu par simple séchage dans un sécheur pneumatique de l'hémihydrate α tel qu'obtenu à la sortie d'une usine de production d'acide phosphorique.

Analyse chimique : $P_2O_5$ acide : 0,1% (par rapport à la quantité de $CaSO_4$). $H_2O$ de cristallisation 6%.

Granulométrie (mesurée par tamisage sur un tamis de 45 $\mu$m) : 70% de refus à 45 $\mu$m.

Surface spécifique : < 1000 cm²/gr (mesurée selon la norme allemande DIN 1164 4ème partie).

Rapport eau/plâtre (déterminé par une mesure d'étalement d'après la norme Allemande DIN 18555; le rapport eau/plâtre pris en considération sera celui pour lequel l'étalement est égal à 240 mm, sauf indication contraire) : 0,26.

Temps de prise (mesuré à l'aiguille de Vicat d'après la norme allemande DIN 1168) :
- Début de prise : 15 min ± 10 min
- Fin de prise : 25 min ± 10 min

Résistances à la flexion et à la compression (N/mm², mesurée sur des barrettes de 4 x 4 x 16 cm, selon la norme allemande DIN 1168) après :

| 1h | 0 / 0 |
|---|---|
| 3h | 0 / 0 |
| 5h | 0,7 / 2,0 |
| 1J | 3,5 / 14,0 |
| 7J | 5,0 / 20,0 |
| 28J | 5,5 / 25,0. |

On obtient les mêmes résultats à l'aide d'une auge à double enveloppe munie de vis ou de palettes chauffées.

Exemple 2

Hémihydrate α, similaire à l'exemple 1, mais ayant subi des opérations de lavage, broyage, séchage et neutralisation et présentant les caractéristiques suivantes :
Analyse chimique : $P_2O_5$ acide < 0,1%
$H_2O$ de cristallisation : 6%
Granulométrie : refus à 45 $\mu$m : 50%
Surface spécifique : 1500 cm²/g
Rapport eau sur plâtre : 0,28
Agent neutralisant : 0,1% $Ca(OH)_2$
Début de prise : 45 min.
Fin de prise : 60 min.
Résistances à la flexion et à la compression (N/mm²) après :

| 1h | 0 / 0 |
|---|---|
| 3h | 0,5 / 1,5 |
| 5h | 2,0 / 6,0 |
| 1J | 5,0 / 20,0 |
| 7J | 6,5 / 28,0 |
| 28J | 7,3 / 35,0. |

4

Exemple 3

Hémihydrate $\alpha$ , similaire à l'exemple 1, mais ayant subi ds opérations de lavage, broyage, séchage et neutralisation et présentant les caractéristiques suivantes :

L'analyse chimique, la granulométrie et la surface spécifique sont identiques à l'exemple 2.

Agent neutralisant : 0,1% $Ca(OH)_2$

Additif modificateur de prise : 10% de gypse finement et fraîchement broyé.

Rapport eau/plâtre : 0,25.

Début de prise : 15 min.

Fin de prise : 23 min.

Résistances à la flexion et à la compression ($N/mm^2$) après :

| 1h | 0,5 / 1,5 |
|-----|-----------|
| 3h | 2,0 / 6,0 |
| 5h | - / - |
| 1J | 5,5 / 23,0 |
| 7J | 6,5 / 28,0 |
| 28J | 7,5 / 38,0. |

Exemple 4

Hémihydrate $\alpha$ , similaire à l'exemple 1, mais ayant subi des opérations de lavage, broyage, séchage et neutralisation et présentant les caractéristiques suivantes :

L'analyse chimique, la granulométrie et la surface spécifique sont identiques à l'exemple 2.

Agent neutralisant : 0,15% de $CaCO_3$

Additif modificateur de prise : 20% de gypse fraîchement et finement broyé

Rapport eau/plâtre : 0,26.

Début de prise : 10 min.

Fin de prise : 15 min.

Résistances à la flexion et à la compression ($N/mm^2$) après :

| 1h | 1,0 / 4,0 |
|-----|-----------|
| 3h | 3,0 / 20,0 |
| 1J | 5,5 / 23,0 |
| 7J | 6,5 / 28,0. |

Exemple 5

Hémihydrate $\alpha$ , similaire à l'exemple 1, mais ayant subi des opérations de lavage, broyage, séchage-calcination et neutralisation, et présentant les caractéristiques suivantes :

Analyse chimique : $P_2O_5$ acide < 0,1%

$H_2O$ de cristallisation : 3%.

Granulométrie : 15% refus à 45 $\mu$m

Surface spécifique : 3500 $cm^2/g$

Rapport eau/plâtre : fixé arbitrairement à 0,3.

Agent neutralisant : 0,15% de CaO

Début de prise : 5 min.

Fin de prise : 7 min.

Résistances à la flexion et à la compression ($N/mm^2$) après :

| 1h | 0,5 / 2,5 |
|---|---|
| 3h | 1,9 / 14,0 |
| 5h | 3,0 / 17,0 |
| 1J | 5,0 / 28,0 |
| 7J | 6,5 / 38,0 |
| 28J | 8,0 / 53,0 |

Exemple 6

Hémihydrate $\alpha$ , similaire à l'exemple 1, mais ayant subi des opérations de lavage, broyage, séchage-calcination, et neutralisation et présentant les caractéristiques suivantes :

L'analyse chimique, la granulométrie et la surface spécifique sont identiques à l'exemple 5.

Rapport eau/plâtre : 0,4

Agent neutralisant : 0,1% de CaO

Modificateur de prise : 0,2% de $K_2SO_4$

Début de prise : 3 min

Fin de prise : 7,5 min

Résistances à la flexion et à la compression ($N/mm^2$) après :

| 1h | 0,5 / 2,5 |
|---|---|
| 3h | 1,0 / 2,5 |
| 1J | 2,0 / 8,0 |
| 7J | 5,0 / 30,0 |

Exemple 7

Hémihydrate $\alpha$, similaire à l'exemple 1, mais ayant subi des opérations de lavage, broyage et séchage-calcination, et présentant les caractéristiques suivantes :

Analyse chimique : $P_2O_5$ acide : 0,02%

$H_2O$ de cristallisation : 4%

Granulométrie : 18% de refus à 45 $\mu$m

Surface spécifique : 3000 $cm^2/g$

Rapport eau/plâtre : 0,3

Début prise : 2,75 min.

Fin prise : 3,5 min.

Résistances à la flexion et à la compression ($N/mm^2$) après :

| 1h | 0,5 / 2,3 |
|---|---|
| 3h | 2 / 7,3 |
| 5h | 3,3 / 10 |
| 1J | 5 / 20 |
| 7J | 7 / 30 |
| 28J | 8,5 / 50. |

Sauf indications contraires toutes les proportions indiquées représentent des proportions en poids (W/W) et les teneurs chimiques sont exprimées en fonction de la quantité de $CaSO_4$ anhydre.

**Revendications**

1. Procédé de traitement du sulfate de calcium hémihydrate sous forme alpha par lavage et broyage selon lequel on utilise du sulfate de calcium hémihydraté sous forme alpha obtenu à la sortie d'une unité de fabrication d'acide phosphorique par cristallisation multiple, lavé soigneusement afin de limiter les teneurs en impuretés, et selon lequel on effectue, sans permettre une réhydratation substantielle en gypse, un séchage-calcination de manière à obtenir un produit fini présentant une teneur en eau de cristallisation égale ou comprise entre 6 % et 1,5 % et un broyage de manière à obtenir une granulométrie telle que le refus à 45 $\mu$m soit inférieur ou égal à 60 %.

2. Procédé selon la revendication 1 caractérisé en ce que les opérations de broyage et de séchage-calcination sont effectuées en même temps.

3. Procédé selon la revendication 1 ou 2 caractérisé en ce que l'opération de broyage réduit la granulométrie du produit alimenté jusqu'à une valeur égale ou comprise entre 60 % de refus à 45 $\mu$m et 10 % de refus à 45 $\mu$m ou une surface spécifique comprise entre 1500 et 5000 cm$^2$/gr.

4. Procédé selon l'une quelconque des revendications précédentes caractérisé en ce que le séchage-calcination donne un produit fini présentant une teneur en anhydrite allant jusqu'à 75 %.

5. Procédé selon l'une quelconque des revendications précédentes caractérisé en ce que le produit obtenu est traité par addition d'un agent neutralisant.

6. Procédé selon l'une quelconque des revendicaitons précédentes caractérisé en ce que le produit obtenu est traité de façon connue pour neutraliser l'acidité résiduaire par addition d'un agent neutralisant tel que la chaux vive, la chaux hydratée, le carbonate de calcium ou un mélange de ces composantes en vue d'améliorer les résistances mécaniques du produit.

7. Procédé selon l'une quelconque des revendications précédentes caractérisé en ce que l'effet de vitesse de prise obtenu lors du broyage-séchage-calcination est accentué par addition d'accélérateurs ou de retardateurs classiques tels que : gypse finement et fraîchement broyé, chaux vive ou hydratée, sulfate de potassium, sulfate ferrique, chlorures, protéines dégradées, matières organiques telles que sucres, mélasses, acides monocarboxyliques , dicarboxyliques ou tricarboxyliques comportant 2 à 6 atomes de carbone.

8. Produit obtenu par mélange du produit obtenu selon le procédé de l'une des revendications 1 à 7 avec de l'anhydrite, du gypse, de l'hémihydrate de forme $\beta$ , du carbonate de calcium, des cendres volantes, du sable, de l'argile, du poussier de carrière ou autres matières de charge connues en soi, l'hémihydrate $\alpha$ servant de liant, en une teneur allant de 10 à 80 %.

## Claims

1. Process for the treatment of $\alpha$-form calcium sulphate hemihydrate by drying and grinding according to which one uses $\alpha$-form calcium sulphate hemihydrate obtained at the output of a unit for the manufacture of phosphoric acid by multiple crystallization, carefully washed, in order to limit the contents of impurities, and according to which, one carries out, without allowing a significant rehydration to gypsum, a drying-calcination operation in such a way to obtain a finished product having a water of crystillization content equal to or between 6 % and 1.5 %, and a grinding operation in such a way to obtain a particle size distribution such as the oversize at 45 $\mu$m is lower than or equal to 60 %.

2. Process according to claim 1, characterized in that the grinding and drying-calcination operations are carried out at the same time.

3. Process according to claim 1 or 2, characterized in that the grinding operation reduces the particle size distribution of the product fed to a value equal to or between 60 % oversize at 45 $\mu$m and 10 % oversize at 45 $\mu$m, or a specific surface comprised between 1500 and 5000 cm$^2$/g.

4. Process according to any one of the preceding claims, characterized in that the drying-calcining yields a finished product which has an anhydrite content ranging up to 75 %.

5. Process according to any one of the preceding claims, characterized in that the product obtained is treated by the addition of a small quantity of a neutralizing agent.

6. Process according to any one of the preceding claims, characterized in that the product obtained is treated in a known manner to neutralize the residual acidity by the addition of a small quantity of a neutralizing agent such as quicklime, hydrated lime, calcium carbonate or a mixture of these components in order to improve the mechanical strength of the product.

**7.** Process according to any one of the preceding claims, characterized in that the rate of setting effect obtained during the grinding-drying-calcining is emphasized by the addition of conventional accelerators or retarders such as freshly finely group gypsum, quicklime or hydrated lime, potassium sulphate, ferric sulphate, chlorides, degraded proteins, organic materials such as sugars, molasses, and mono, di or tricarboxylic acids containing 2 to 6 carbon atoms.

**8.** Product obtained by mixture of the product obtained by the process of any one of claims 1 to 7, with anhydrite, gypsum, $\beta$-form hemihydrate, calcium carbonate, fly ash, sand, clay, quarry dust or other filler materials which are known per se, the $\alpha$-hemihydrate, being used as binder, in a proportion ranging from 10 to 80 %.

**Patentansprüche**

**1.** Verfahren zur Behandlung von Alpha-Calciumsulfathemihydrat durch Waschen und Mahlen, bei welchem Verfahren man ein am Ausgang einer Phosphorsäureproduktionsanlage durch mehrfache Kristallisation anfallendes, zur Beschränkung der enthaltenen Verunreinigungen sorgfältig gewaschenes Alpha-Calciumsulfathemihydrat einsetzt und eine Trocknung-Kalzinierung zur Gewinnung eines Endproduktes mit einen Kristallwassergehalt gleich oder zwischen 6 % bis 1,5 %, wobei eine Rehydratisierung zu Gips verhindert wird, sowie einen Mahlvorgang vornimmt, bei dem eine Korngröße mit einem Siebrückstand bei 45 $\mu$m von weniger oder gleich 60 % erzielt wird.

**2.** Verfahren nach Anspruch 1, **dadurch gekennzeichnet,** daß die Vorgänge von Mahlung und Trockung-Kalzinierung gleichzeitig durchgeführt werden.

**3.** Verfahren nach Anspruch 1 oder 2, **dadurch gekennzeichnet,** daß der Mahlvorgang die Korngröße des eingebrachten Produktes auf einen Wert von gleich oder zwischen 60 % und 10 % Siebrückstand bei 45 $\mu$m herabsetzt oder die spezifische Oberfläche auf einen Wert zwischen 1500 und 5000 cm$^2$/g bringt.

**4.** Verfahren nach einem der vorhergehenden Ansprüche, **dadurch gekennzeichnet,** daß die Trocknung-Kalzinierung ein Endprodukt mit einem Anhydritgehalt von bis zu 75 % ergibt.

**5.** Verfahren nach einem der vorhergehenden Ansprüche, **dadurch gekennzeichnet,** daß das erhaltene Produkt mit einem Neutralisationsmittel versetzt wird.

**6.** Verfahren nach einem der vorhergehenden Ansprüche, **dadurch gekennzeichnet,** daß das erhaltene Produkt in an sich bekannter Weise zur Neutralisation der Restazidität mit einem Neutralisationsmittel, wie gebranntem oder gelöschtem Kalk, Calciumcarbonat oder einer Mischung dieser Bestandteile versetzt wird, um eine Verbesserung der mechanischen Festigkeitswerte des Produktes zu erreichen.

**7.** Verfahren nach einem der vorhergehenden Ansprüche, **dadurch gekennzeichnet,** daß die Wirkung der bei der Mahlung-Trocknung-Kalzinierung erhaltenen Abbindegeschwindigkeit beeinflußt wird durch den Zusatz von bekannten Beschleunigungs- oder Verzögerungsmitteln, wie: fein und frisch gemahlener Gips, gebrannter oder gelöschter Kalk, Kaliumsulfat, Eisen(II)sulfat, Chloride, abgebaute Proteine, organische Materialien, wie Zuckerarten, Melassesorten, Mono-, Di- und Tricarbonsäuren mit 2 bis 6 Kohlenstoffatomen.

**8.** Produkt, das durch Mischung des nach dem Verfahren nach einem der Ansprüche 1 bis 7 erhaltenen Produktes mit Anhydrit, Gips, $\beta$-Hemihydrat, Calciumcarbonat, Flugaschen, Sand, Ton, Grubenstaub oder anderen an sich bekannten Füllstoffen erhalten wurde, wobei das Alpha-Hemihydrat in einer Menge von 10 % bis 80 % als Bindemittel dient.